(19) Europäisches Patentamt
European Patent Office
Office européen des brevets

(11) **EP 0 863 485 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **G06T 5/00**, G06K 9/00, G06K 9/62

(21) Anmeldenummer: **98103285.7**

(22) Anmeldetag: **25.02.1998**

(54) **Verfahren zum Rekonstruieren von Mustern**

Method of reconstruction of patterns

Procédé de reconstitution d'images

(84) Benannte Vertragsstaaten:
**CH DE FR GB LI**

(30) Priorität: **03.03.1997 DE 19708593**

(43) Veröffentlichungstag der Anmeldung:
**09.09.1998 Patentblatt 1998/37**

(73) Patentinhaber: **Definiens AG.**
**80331 München (DE)**

(72) Erfinder: **Schmidt, Günter, Dr.**
**82008 Unterhaching (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
- **SCHOLKOPF B ET AL: "Kernel PCA pattern reconstruction via approximate pre-images" ICANN 98. PROCEEDINGS OF THE 8TH INTERNATIONAL CONFERENCE ON ARTIFICIAL NEURAL NETWORKS, PROCEEDINGS OF 8TH INTERNATIONAL CONFERENCE ON ARTIFICIAL NEURAL NETWORKS, SKOVDE, SWEDEN, 2-4 SEPT. 1998, Seiten 147-152 vol.1, XP002174877 1998, London, UK, Springer-Verlag London, UK ISBN: 3-540-76263-9**
- **DATABASE INSPEC [Online] THE INSTITUTION OF ELECTRICAL ENGINEERS, STEVENAGE, GB; A. TAMAKI: "A method of pattern-reconstruction from the feature extracted by correlation transform" Database accession no. 2427492 XP002174878 & BULLETIN OF THE KYUSHU INSTITUTE OF TECHNOLOGY, Nr. 48, März 1984 (1984-03), Seiten 31-38, JAPAN**
- **Little, R.J.A. et Rubin, D.B. :"Statistical Analysis with Missing Data", John Wiley & Sons, 1987, ISBN 0-471-80254-9**
- **University of Texas, Statistical Services, General Frequently Asked Questions: "Handling Missing or Incomplete Data", 17 March 2002: http://www.utexas.edu/cc/faqs/stat/general/gen 2- 5.html**
- **Roth, P.L. : "Missing Data: A conceptual Review for Applied Psychologists", Personnel Psychology, Vol. 47, 1994, pp. 537-560**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Rekonstruieren von Mustern mit einem informationsverarbeitenden System gemäß dem Oberbegriff des Anspruchs 1.

Die Rekonstruktion von nur teilweise bekannten Mustern ist ein zentrales Problem in allen informationsverarbeitenden Systemen. Wie bereits erwähnt, soll in der vorliegenden Erfindung unter dem Begriff "Muster" dabei eine Menge von Merkmalen verstanden werden, die entweder als elementar anzusehen sind oder ihrerseits Muster repräsentieren (also ein Muster, dessen Merkmale hierarchisch strukturiert vorliegen).

Im Stand der Technik sind bereits zahlreiche Verfahren zur Rekonstruktion von Mustern bekannt. Diese weisen jedoch mehrere Nachteile auf:

Bei neuronalen Netzen ist der sogenannte "Einlernvorgang" sehr zeitintensiv und das Rekonstruktionsergebnis ist oft nicht nachvollziehbar. Auch ist das Eingelernte nicht interpretierbar und entzieht sich somit gezielten Veränderungen.

Andere bekannte Rekonstruktionsverfahren können im allgemeinen nicht mit Hilfe von Stichproben eingelernt werden und durch neue Stichproben ergänzt und verbessert werden. Dies ist ein erheblicher Nachteil von derartigen Verfahren.

Ein weiterer Nachteil der bekannten Rekonstruktionsverfahren liegt darin, daß diese nahezu alle sehr eng auf spezielle Problemstellungen zugeschnitten sind, so daß eine Adaption an andere Problemstellungen jeweils kaum möglich oder nur mit einem erheblichen Aufwand durchführbar ist.

Aus Little, R.J.A. et Rubin, D.B.:"STATISTICAL ANALYSIS WITH MISSING DATA", John Wiley & Sons, 1987, ISBN 0-471-80254-9, Seiten 3 bis 7, 60 bis 67 und aus Roth, P.L.: "MISSING DATA: A CONCEPTUAL REVIEW FOR APPLIED PSYCHOLOGISTS", Personnel Psychology, Bd. 47, 1994, Seiten 537 bis 560 ist jeweils ein Verfahren gemäß dem Oberbegriff des Anspruchs 1 bekannt.

Der vorliegenden Erfindung liegt die Aufgabe zugrunde, ein Verfahren gemäß dem Oberbegriff des Anspruchs 1 derart weiterzubilden, daß es bei jeder Art von Aufgabenstellung verwendbar ist und über Stichproben eingelernt und auf eine einfache Weise erweitert werden kann.

Diese Aufgabe wird erfindungsgemäß mit den in Anspruch 1 angegebenen Maßnahmen gelöst.

Gemäß dem Gegenstand des Anspruchs 1 werden fehlende Merkmale in einem jeweils vorliegenden Muster auf eine möglichst optimale Weise ergänzt. Die Art der Rekonstruktion wird dabei nicht von Modellen vorgegeben, sondern durch die jeweilige Stichprobe adaptiv erlernt. Dabei sollte die Stichprobe aus einer Menge von möglichst vollständig bekannten Mustern bestehen, d.h. alle Merkmale der Muster der Stichprobe sollten möglichst genau erfaßt sein und es sollten möglichst wenige Merkmale fehlen. Weiterhin wird ein Umfang der Stichprobe vor dem eigentlichen Durchführen der Rekonstruktion reduziert.

Das erfindungsgemäße Verfahren ist vielfältig einsetzbar. So kann es zum Beispiel zur Korrektur von Störungen in Bild- und Audiodaten verwendet werden.

Weitere vorteilhafte Ausgestaltungen der vorliegenden Erfindung sind Gegenstand der abhängigen Ansprüche.

Die Erfindung wird nachstehend anhand der Beschreibung von Ausführungsbeispielen unter Bezugnahme auf die Zeichnung näher erläutert. Es zeigen:

Fig.1 eine aus 15 Mustern bestehende vollständige Stichprobe, in der jedes Muster durch zwei Merkmale (A und B) gekennzeichnet ist;
Fig.2 die auf nur noch fünf Muster reduzierte Stichprobe der Fig.1;
Fig.3 zeigt ein fehlerhaftes bzw. zu rekonstruierendes Muster in dessen Relation zu der reduzierten Stichprobe der Fig.2; und
Fig.4 das anhand der Fig.3 rekonstruierte Muster.

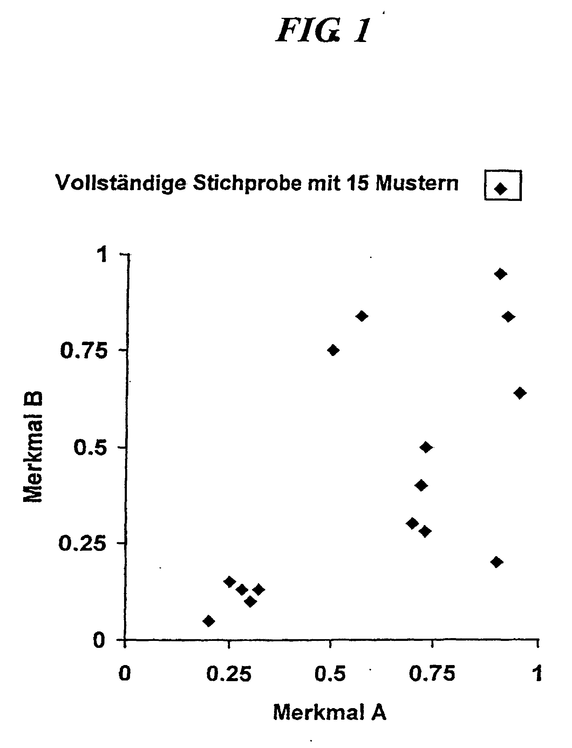

In Fig.1 ist beispielhaft eine vollständige Stichprobe gezeigt, die aus insgesamt 15 Mustern besteht (d.h. Stichprobenumfang N = 15). Jedes Muster ist in der Fig.1 mit dem Symbol "♦" bezeichnet und ist durch insgesamt zwei Merkmalswerte eindeutig gekennzeichnet; da der erste Merkmalswert "A" auf der Abszisse und der zweite Merkmalswert "B" auf der Ordinate aufgetragen ist, ist im vorliegenden Ausführungsbeispiel jedes Muster durch seine Lage im zweidimensionalen Koordinatenfeld gekennzeichnet.

Die Typen der Merkmale eines Musters sind im Prinzip frei wählbar. Eine vorteilhafte Wahl der Merkmale besteht jedoch darin, wenn die Muster hierarchisch gegliedert sind, das heißt wenn Merkmale von Mustern wieder Muster darstellen, wenn die Merkmale eines Musters relativ zu den Merkmalen des hierarchisch übergeordneten oder untergeordneten Musters angegeben werden, oder wenn die Merkmale eines Musters unabhängig von der gewählten Skala sind. Eine solche Wahl läßt Rekonstruktionsmethoden zu, die Ähnlichkeiten zwischen den unterschiedlichsten Mustern benutzen, um fehlende Merkmale zu ergänzen. Dabei ist eine Verknüpfung der Informationen aus unterschiedlichen Hierarchieebenen ebenso denkbar wie eine Verknüpfung von thematisch ähnlichen Größen ("analoges Schließen").

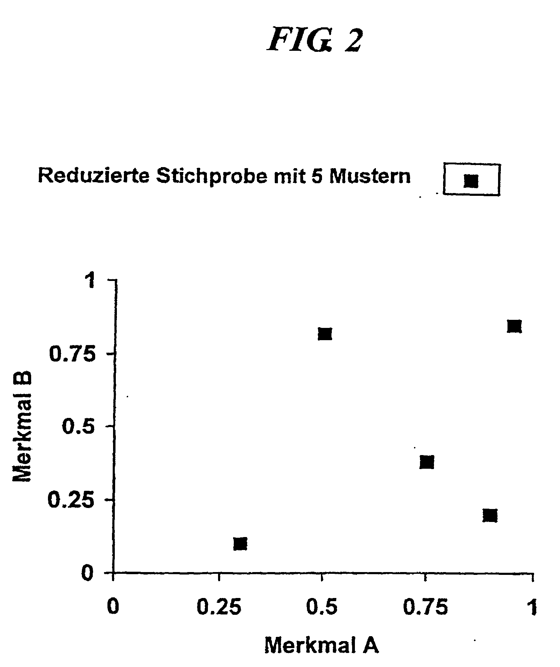

In Fig.2 ist eine auf nur noch fünf Muster reduzierte Stichprobe der Fig.1 gezeigt; die Muster dieser reduzierten Stichprobe sind mit dem Symbol "■" bezeichnet. Die Reduktion des Stichprobenumfangs erfolgt, indem jeweils zwei oder mehrere Muster der Stichprobe auf ihre Ähnlichkeit hin untersucht und bei ausreichender Ähnlichkeit durch ein repräsentatives Muster ersetzt werden.

Die Ähnlichkeit zwischen zwei Stichproben-Mustern läßt sich als Zahlenwert fassen, der abhängig ist von der paarweisen Ähnlichkeit der bekannten Merkmale von beiden Mustern und/oder der Anzahl und Art derjenigen Merkmale, mit denen jedes Stichproben-Muster fehlende Merkmale des anderen Stichproben-Musters ersetzen kann.

Das Zusammenfassen einer Menge von ähnlichen Stichproben-Mustern zu einem neuen, für diese Menge repräsentativen Muster, kann mit verschiedenen Verfahren erfolgen. Diese Verfahren sind abhängig von der Art der Merkmale in den Mustern.

wenn der Mittelwert von zwei ähnlichen Muster-Merkmalen beide Muster-Merkmale mit geringem Informationsverlust beschreibt, so ist ein Mittelungsverfahren denkbar, mit dem eine Menge von ähnlichen Mustern durch ein Muster ersetzt wird, dessen Merkmale die Mittelwerte der entsprechenden Merkmale der gesamten Menge darstellen. Mögliche Verfahren zur Mittelwertbildung sind hierbei: das Median-Mittel, das geometrische oder das arithmetische Mittel.

In allen anderen Fällen ist ein Verfahren denkbar, bei dem das neue, repräsentative Muster in der Art generiert wird, daß das Produkt seiner Ähnlichkeiten zu den Mustern der Menge maximal wird.

Fehlt ein Merkmal in einem Muster, so wird das Merkmal jenes Musters der Menge übernommen, das ihm am ähnlichsten ist.

Stark gewichtete Muster können dabei in das Mittelungsverfahren mit einem höheren Multiplikationsfaktor einfließen als weniger stark gewichtete.

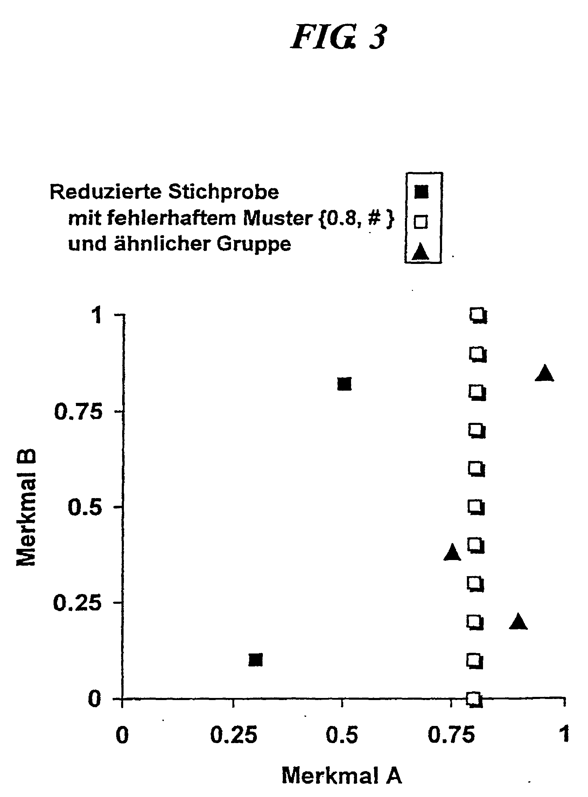

In Fig.3 ist die in Fig.2 beschriebene reduzierte Stichprobe dargestellt, wobei in diesem Fall zusätzlich ein fehlerhaftes Muster gezeigt wird; dieses mit dem Symbol "□" dargestellte Muster hat im Falle des Merkmals A den Wert 0.8, während sein Merkmal B einen unbekannten Wert aufweist. Die Aufgabe ist es somit in diesem Ausführungsbeispiel, den besten Wert für das unbekannte Merkmal B des Musters "□" zu ermitteln.

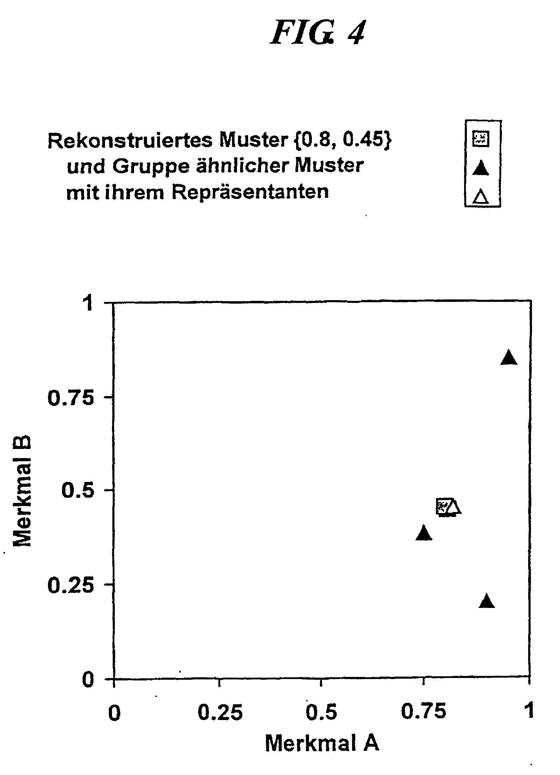

Dies geschieht dadurch, daß diejenigen Muster aus der in Fig.3 gezeigten (reduzierten) Stichprobe ausgewählt werden, die dem zu rekonstruierenden Muster "□" maximal ähnlich sind, worauf das fehlende Merkmal B des zu rekonstruierenden Musters "□" durch den entsprechenden Wert des Merkmals B eines repräsentativen Musters dieser ausgewählten Muster ersetzt wird. In dem gezeigten Beispiel werden zu diesem Zweck die drei rechts gezeigten Muster gewählt, wobei sich deren gemittelter Merkmalswert B als 0.45 ergibt; folglich wird der Merkmalswert B des zu rekonstruierenden Musters "□" durch den Wert 0.45 rekonstruiert. Somit wird schließlich das in Fig.4 gezeigte Ergebnismuster erzielt.

Die für die Rekonstruktion maßgebliche "Ähnlichkeit" zwischen dem jeweils zu rekonstruierenden Muster und dem Stichproben-Muster läßt sich als Zahlenwert auffassen, der abhängig ist von der paarweisen Ähnlichkeit der bekannten Merkmale von beiden Mustern sowie der Anzahl und Art derjenigen Merkmale, mit denen das Stichproben-Muster fehlende Merkmale des zu rekonstruierenden Musters setzen kann.

Die Rekonstruktion des jeweiligen Musters mit Hilfe einer Menge bzw. Gruppe von ähnlichen Stichproben-Mustern erfolgt in einem ersten Schritt dadurch, daß aus den Mustern der Gruppe ein repräsentatives Muster berechnet wird. Dazu wird das Verfahren "Zusammenfassen von ähnlichen Stichproben-Mustern" mit einer Gewichtung der Muster angewandt. Die Gewichtung der einzelnen Muster in der Gruppe entspricht der Ähnlichkeit der jeweiligen Muster zu dem zu rekonstruierenden Muster. In einem zweiten Schritt werden alle fehlenden Merkmale des zu rekonstruierenden Musters durch Merkmale des (für die Gruppe) repräsentativen Musters ersetzt.

Als ein weiteres Ausführungsbeispiel der Erfindung wird nachstehend die Regionalisierung von Emissionsdaten mit Hilfe der Fernerkundung näher beschrieben. Bei dieser Art der Muster-Rekonstruktion liegt die wesentliche Aufgabe in der Regionalisierung von Schadstoff-Emissionen mit Hilfe eines Multikanal-Fernerkundungsdatensatzes.

Da die Erhebung von Emissionsdaten sehr teuer und zeitaufwendig ist, wird versucht, diese Daten aus einem einfach zugänglichen und kostengünstigen Datenmaterial zu erschließen. Eine Möglichkeit zur Gewinnung dieser großräumigen Datenbasis besteht in der Auswertung von satellitenbasierten Fernerkundungsdaten, wie zum Beispiel den von Landsat-TM und SPOT gelieferten Daten.

Dieses Ausführungsbeispiel der Erfindung ermöglicht es, an wenigen, lokal begrenzten Untersuchungsgebieten erhobene Emissionsdaten mit den Fernerkundungsdaten in Beziehung zu setzen und aufgrund dieser Beziehung die Emissionsdaten des gesamten Gebiets zu erschließen (d.h. zu rekonstruieren).

Das folgende Beispiel beschränkt sich auf drei Landsat-TM-Kanäle und auf die Emission von Schwefeldioxid ($SO_2$) des Hausbrands. Das Muster eines Bildpunkts läßt sich damit als vierdimensionaler Vektor beschreiben, der in den Untersuchungsgebieten vollständig bekannt ist und der in der Fläche als fehlendes Merkmal den Emissionswert aufweist.

Definitionen:

d(i): Logarithmus der Dichte der $SO_2$-Emission des Bildpunkts i, bezogen auf 1 Tonne/Jahr/km$^2$;
r(i), g(i), b(i): Helligkeiten der Landsat-TM-Kanäle 1,5,6 des Bildpunkts i. Die Helligkeiten bewegen sich zwischen 0.0 und 1.0;
$M_S(i)$ = { d(i), r(i), g(i), b(i) }: vollständig bekanntes Muster des Bildpunkts i im Untersuchungsgebiet;
$M_\#(j)$ = { # , r(j), g(j), b(j) }: Muster mit fehlender Information über die Dichte der $SO_2$-Emission am Bildpunkt j.

Der erste Schritt der Regionalisierung besteht darin, alle vollständig bekannten Muster in einer Stichprobe zu sammeln.

In einem zweiten Schritt wird diese Stichprobe auf eine kleine Zahl (z.B. 100) von Mustern reduziert. Dabei werden solange sehr ähnliche Musterpaare der Stichprobe zusammengefaßt, bis die gewünschte Anzahl von Mustern erreicht ist. Dabei geschieht das Zusammenfassen mit Hilfe der (arithmetischen) Mittelwertbildung. Die Ähnlichkeit zwischen vollständig bekannten Mustern ist definiert als

$$S(M_S(i),M_S(j)) = exp\{ -(d(i)-d(j))^2 \} * exp\{ -(r(i)-$$
$$r(j))^2 -(g(i)-g(j))^2 -(b(i)-b(j))^2 \}$$

In einem dritten Schritt wird jedes unvollständig bekannte Muster $M_\#(i)$ mit Hilfe des ihm ähnlichsten Musters $M_S(i)$ der Stichprobe rekonstruiert. Die Ähnlichkeit zwischen einem unvollständig bekannten Muster und einem Stichprobenmuster wird definiert als

$$S(M_\#(i),M_S(j)) = exp\{ -(r(i)-r(j))^2 -(g(i)-g(j))^2 -(b(i)-$$
$$b(j))^2 \}$$

Lautet z.B. das unvollständig bekannte Muster

$$M_\#(i) = \{ \# , r(i), g(i), b(i) \}$$

und das ähnlichste Muster

$$M_S(j) = \{ d(j), r(j), g(j), b(j) \}$$

so folgt für das rekonstruierte Muster

$$M_{R\#}(i) = \{ d(j), r(i), g(i), b(i) \}$$

Eine wesentliche Verbesserung des Rekonstruktionsprozesses läßt sich erzielen, wenn neben den Fernerkundungsdaten noch andere, für die Emission wesentliche Größen in die Muster eingehen. Beispielhaft wären hier noch zu nennen die Art der Bebauung, die Art der Beheizung und der Wärmedämmung sowie die topographische Lage.

Auch unvollständiges Wissen über diese Größen läßt sich leicht in das oben beschriebene Verfahren integrieren, indem der Ähnlichkeitsbegriff entsprechend erweitert wird.

Eine weitere vorteilhafte Anwendung des Verfahrens zum Rekonstruieren von Mustern ist der Problemkreis Simulation und Prognose physikalisch-technischer Größen bzw. Meßwerte. In dieser Anwendung sind die Muster von der Art, daß sie aus einer Menge von Merkmalen des Simulationszeitpunktes T und aus einer Menge von Merkmalen des Zeitpunktes T+1 bestehen.

Wird eine Stichprobe aus vollständig bekannten Mustern vorausgesetzt, so lassen sich damit Muster, die nur aus Merkmalen des Zeitpunktes T bestehen, mit dem erfindungsgemäßen Verfahren ergänzen. Dadurch gewinnt man die Merkmale des Zeitpunktes T+1 und somit Informationen über das Verhalten des Musters in der Zukunft.

Zur Vorbereitung eines weiteren Simulationsschritts werden die rekonstruierten Merkmale mit einem geeigneten Verfahren auf die Merkmale des Zeitpunktes T übertragen und anschließend aus dem Muster entfernt. In dieser Weise erhält man sukzessive alle Zeitschritte nach T+2, T+3, .

Wenn die fehlerhaften Merkmale der Eingabe-Muster im voraus nicht bekannt sind, wird aus der Stichprobe ermittelt, welche Merkmale fehlerhaft sind. Dies geschieht dadurch, daß diejenigen Muster-Merkmale als fehlerhaft gekennzeichnet werden, die ein bestimmtes Maß der Ähnlichkeit zu den entsprechenden Merkmalen der nach dem vorstehend beschriebenen Verfahren ausgewählten Muster unterschreiten.

**Patentansprüche**

1. Verfahren zum automatischen Rekonstruieren von Mustern in durch Sensoren erfaßten physikalisch-technischen Daten, wie z.B. Bild und Audiodaten, mit einem informationsverarbeitenden System anhand einer aus N Mustern bestehenden Stichprobe, wobei jedes Muster der Stichprobe durch eine Menge von Merkmalen repräsentiert wird und jedes zu rekonstruierende Muster mindestens ein fehlendes, unvollständiges oder gestörtes Merkmal aufweist, wobei das Verfahren die folgenden Schritte aufweist:

    **[a]** Auswählen mindestens eines Musters, das dem zu rekonstruierenden Muster maximal ähnlich ist, aus der Stichprobe für jedes zu rekonstruierende Muster;
    **[b]** Ersetzen des mindestens einen fehlenden, unvollständigen oder gestörten Merkmals des zu rekonstruierenden Musters durch das mindestens eine entsprechende Merkmal des mindestens einen ausgewählten Musters; und
    **[c]** Durchführen der Schritte **[a]** und **[b]** für jedes zu rekonstruierende Muster,

    *dadurch gekennzeichnet, daß*:

    ein Umfang der Stichprobe vor dem Durchführen der Rekonstruktion dadurch reduziert wird, daß jeweils zwei oder mehrere Muster der Stichprobe auf ihre Ähnlichkeit hin untersucht und bei einer ausreichenden Ähnlichkeit durch ein repräsentatives Muster ersetzt werden.

**2.** Verfahren nach Anspruch 1, *dadurch gekennzeichnet, daß* erfolgreich rekonstruierte Muster der Stichprobe hinzugefügt werden.

**3.** Verfahren nach Anspruch 1 oder 2, *dadurch gekennzeichnet, daß* in dem Schritt **[a]** für jedes zu rekonstruierende Muster aus der Stichprobe mehrere Muster ausgewählt werden, die dem zu rekonstruierenden Muster maximal ähnlich sind, und aus den ausgewählten Mustern ein repräsentatives Vorlagen-Muster berechnet wird, dessen Merkmale in dem Schritt **[b]** für die Rekonstruktion verwendet werden.

**4.** Verfahren nach einem der Ansprüche 1 bis 3, *dadurch gekennzeichnet, daß* jedes Muster-Merkmal elementar vorliegt.

**5.** Verfahren nach einem der Ansprüche 1 bis 3, *dadurch gekennzeichnet, daß* Muster-Merkmale sowohl elementar als auch in Form eines Musters vorliegen.

**6.** Verfahren nach Anspruch 5, *dadurch gekennzeichnet, daß* die Muster hierarchisch strukturiert sind und die elementaren Muster-Merkmale eine Relation zu den elementaren Muster-Merkmalen von hierarchisch darüberliegenden oder darunterliegenden Muster aufweisen.

**7.** Verfahren nach einem der Ansprüche 1 bis 6, *dadurch gekennzeichnet, daß* die Merkmale jedes Musters eine geordnete Menge bilden.

**8.** Verfahren nach einem der Ansprüche 1 bis 7, *dadurch gekennzeichnet, daß* die Reduktion des Umfangs der Stichprobe derart durchgeführt wird, daß ein Informationsverlust minimiert wird.

**9.** Verfahren nach einem der Ansprüche 1 bis 8, *dadurch gekennzeichnet, daß* ein Mittelwert von zwei ähnlichen Muster-Merkmalen beide Muster-Merkmale mit geringem Informationsverlust beschreibt und ein Mittelungsverfahren durchgeführt wird, bei dem eine Menge von ähnlichen Mustern durch ein Muster ersetzt wird, dessen Merkmale die Mittelwerte der entsprechenden Merkmale der gesamten Menge darstellen.

**10.** Verfahren nach einem der Ansprüche 1 bis 9, *dadurch gekennzeichnet, daß* die zu rekonstruierenden Muster nicht Teil der Stichprobe sind.

**11.** Verfahren nach Anspruch 10, *dadurch gekenn-*

*zeichnet, daß* die Rekonstruktion zum Regionalisieren verwendet wird, wobei lokal bekannte Größen auf flächenhafte Gebiete übertragen werden und die unbekannten Größen fehlende Merkmale in den zu rekonstruierenden Mustern darstellen.

**12.** Verfahren nach Anspruch 10, *dadurch gekennzeichnet, daß* die Rekonstruktion zum Prognostizieren verwendet wird, wobei fehlende Informationen in den zu rekonstruierenden Mustern diejenigen Merkmale sind, die die Zukunft beschreiben.

**13.** Verfahren nach Anspruch 10, *dadurch gekennzeichnet, daß* die Rekonstruktion zum Korrigieren von Störungen in einem Datensatz, insbesondere in Bild- und Audiodaten, verwendet wird.

**14.** Verfahren nach einem der Ansprüche 1 bis 19, *dadurch gekennzeichnet, daß* die zu rekonstruierenden Muster Teil der Stichprobe sind und die Schritte **[a]** und **[b]** für alle Muster der Stichprobe durchgeführt werden.

**15.** Verfahren nach einem der Ansprüche 1 bis 14, *dadurch gekennzeichnet, daß* die fehlerhaften Merkmale von Eingabe-Mustern im voraus nicht bekannt sind und aus der Stichprobe ermittelt wird, welche Merkmale fehlerhaft sind.

**16.** Verfahren nach Anspruch 15, *dadurch gekennzeichnet, daß* diejenigen Muster-Merkmale als fehlerhaft gekennzeichnet werden, die ein bestimmtes Maß der Ähnlichkeit zu den entsprechenden Merkmalen der in dem Schritt **[a]** ausgewählten Muster unterschreiten.

## Claims

**1.** Method of automatically reconstructing patterns in physical-technical data detected by sensors, such as video and audio data for example, with a data processing system on the basis of a random sample consisting of N patterns, whereby every pattern of the random sample is represented by a quantity of attributes and every pattern to be reconstructed has at least one missing, incomplete or corrupted attribute, the method consisting of the following steps:

[a] for every pattern to be reconstructed, selecting at least one pattern from the random sample which has the maximum similarity to the pattern to be reconstructed;

[b] replacing the at least one missing, incomplete or corrupt attribute of the pattern to be reconstructed with the at least one corresponding attribute of the at least one selected pattern; and

[c] running steps [a] and [b] for every pattern to be reconstructed,

    *characterised in that*:

prior to running the reconstruction, the scale of the random sample is reduced by testing two or more patterns of the random sample for their similarity and if there is sufficient similarity, replacing them with one representative pattern.

2. Method as claimed in claim 1, *characterised in that* successfully reconstructed patterns are added to the random sample.

3. Method as claimed in claim 1 or 2, *characterised in that*, for every pattern to be reconstructed, several patterns which are similar to the pattern to be reconstructed are selected from the random sample in step [a] and a representative master pattern is computed from the selected patterns, the attributes of which are used for the reconstruction in step [b].

4. Method as claimed in one of claims 1 to 3, *characterised in that* every pattern attribute is present in elementary format.

5. Method as claimed in one of claims 1 to 3, *characterised in that* pattern attributes are present in both elementary format and in the form of a pattern.

6. Method as claimed in claim 5, *characterised in that* the patterns are hierarchically structured and the elementary pattern attributes are correlated with the elementary pattern attributes of hierarchically superior or inferior patterns.

7. Method as claimed in one of claims 1 to 6, *characterised in* **that** the attributes of every pattern form an ordered quantity.

8. Method as claimed in one of claims 1 to 7, *characterised in* **that** the scale of the random sample is reduced in such a way that information loss is minimised.

9. Method as claimed in one of claims 1 to 8, *characterised in that* a mean value of two similar pattern attributes describes both pattern attributes with a low information loss and an averaging process is operated whereby a quantity of similar patterns are replaced by one pattern, the attributes of which represent the corresponding attributes of the entire quantity.

10. Method as claimed in one of claims 1 to 9, *characterised in that* the pattern to be reconstructed is not part of the random sample.

11. Method as claimed in claim 10, *characterised in that* the reconstruction is used for regionalisation purposes, whereby known local variables are transposed to regions on the basis of surface area and represent the unknown variables of missing attributes in the patterns to be reconstructed.

12. Method as claimed in claim 10, *characterised in that* the reconstruction is used for prognostic purposes, whereby missing information in the patterns to be reconstructed constitutes those features which describe the future.

13. Method as claimed in claim 10, *characterised in that* the reconstruction is used to correct errors in a data set, in particular video and audio data.

14. Method as claimed in one of claims 1 to 19, *characterised in that* the patterns to be reconstructed are part of the random sample and steps [a] and [b] are run for all patterns of the random sample.

15. Method as claimed in one of claims 1 to 14, *characterised in that* the missing attributes of input patterns are not known in advance and it is ascertained from the random sample which features are missing.

16. Method as claimed in claim 15, *characterised in that* the pattern attributes which are characterised as missing are those which fall below a specific degree of similarity to the corresponding attributes of the patterns selected in step [a].

### Revendications

1. Procédé pour reconstituer de façon automatique des profils dans des données physico-techniques détectées par des capteurs, comme par exemple des données d'image et des données audio, avec un système de traitement d'informations, sur la base d'un échantillon constitué de N profils, chaque profil de l'échantillon étant représenté par une quantité de caractéristiques et chaque profil à reconstituer comportant au moins une caractéristique manquante, incomplète ou perturbée, le procédé comportant les étapes suivantes :

    [a] sélection d'au moins un profil, qui est similaire au maximum au profil à reconstitur, à partir de l'échantillon pour chaque profil à reconstituer ;
    [b] remplacement de la au moins une caractéristique manquante, incomplète ou perturbée du profil à reconstituer, par la au moins une caractéristique correspondante du au moins un profil sélectionné ; et

[c] exécution des étapes [a] et [b] pour chaque profil à reconstituer,

**caractérisé en ce que** :

un volume de l'échantillon est réduit avant la mise en oeuvre de la reconstitution par le fait qu'on examine la similitude de respectivement deux ou plusieurs profils de l'échantillon et que, dans le cas d'une similitude suffisante, ces profils sont remplacés par un profil représentatif.

2. Procédé selon la revendication 1, **caractérisé en ce qu'**on ajoute des profils reconstitués avec succès de l'échantillon.

3. Procédé selon la revendication 1 ou 2, **caractérisé en ce que** lors de l'étape [a] pour chaque profil à reconstituer à partir de l'échantillon on sélectionne plusieurs profils, qui présentent une similitude maximale avec le profil à reconstituer, et qu'on calcule, à partir des profils sélectionnés, un profil de modèle représentatif, dont les caractéristiques sont utilisées lors de l'étape [b] pour la reconstitution.

4. Procédé selon l'une de revendications 1 à 3, **caractérisé en ce que** chaque caractéristique de profil est présente sous forme élémentaire.

5. Procédé selon l'une des revendications 1 à 3, **caractérisé en ce que** des caractéristiques de profil sont présentes aussi bien sous forme élémentaire que sous la forme d'un profil.

6. Procédé selon la revendication 5, **caractérisé en ce que** les profils sont structurés hiérarchiquement et les caractéristiques élémentaires de profil présentent une relation avec les caractéristiques élémentaires, de profils supérieurs ou inférieurs hiérarchiquement.

7. Procédé selon l'une des revendications 1 à 6, **caractérisé en ce que** les caractéristiques de chaque profil forment une quantité ordonnée.

8. Procédé selon l'une des revendications 1 à 7, **caractérisé en ce que** la réduction du volume de l'échantillon est exécutée de telle sorte qu'une perte d'informations est réduite au minimum.

9. Procédé selon l'une des revendications 1 à 8, **caractérisé en ce qu'**une valeur moyenne de deux caractéristiques similaires de profil décrit les deux caractéristiques de profil avec une faible perte d'information et qu'on exécute un procédé de formation de la moyenne, lors duquel une quantité de profils similaires sont remplacés par un profil, dont les caractéristiques représentent les valeurs moyennes des caractéristiques correspondantes de la quantité totale.

10. Procédé selon l'une de revendications 1 à 9, **caractérisé en ce que** les profils devant être reconstitués ne font pas partie de l'échantillon.

11. Procédé selon la revendication 10, **caractérisé en ce que** la reconstitution est utilisée pour la régionalisation, auquel cas des grandeurs connues localement sont transmises à des régions d'une certaine surface et les grandeurs inconnues représentent des caractéristiques manquantes dans les profils à reconstituer.

12. Procédé selon la revendication 10, **caractérisé en ce que** la reconstitution est utilisée pour l'établissement de pronostics, auquel cas des informations manquantes dans les profils à reconstituer sont les caractéristiques qui décrivent l'avenir.

13. Procédé selon la revendication 10, **caractérisé en ce que** la reconstitution est utilisée pour corriger des perturbations dans un ensemble de données, notamment dans des données d'image et dans des données audio.

14. Procédé selon l'une des revendications 1 à 19, **caractérisé en ce que** les profils à reconstituer font partie de l'échantillon et des étapes [a] et [b] sont exécutés pour tous les profils de l'échantillon.

15. Procédé selon l'une de revendications 1 à 14, **caractérisé en ce que** les caractéristiques défectueuses de profils d'entrée ne sont pas connues par avance et qu'une détermination est faite dans l'échantillon pour savoir quelles caractéristiques sont défectueuses.

16. Procédé selon la revendication 15, **caractérisé en ce que** les caractéristiques de profil, qui tombent au-dessous d'un degré déterminé de similitude avec les caractéristiques correspondantes des profils sélectionnés lors de l'étape [a], sont caractérisées comme étant défectueuses.

# FIG 1

Vollständige Stichprobe mit 15 Mustern

# FIG 2

**Reduzierte Stichprobe mit 5 Mustern** ▪

## FIG 3

Reduzierte Stichprobe
   mit fehlerhaftem Muster {0.8, # }
und ähnlicher Gruppe

# FIG. 4

Rekonstruiertes Muster {0.8, 0.45}
und Gruppe ähnlicher Muster
mit ihrem Repräsentanten